# EUROPEAN PATENT APPLICATION

(11) **EP 1 195 634 A2**
(43) Date of publication of application: **10.04.2002**
(21) Application number: 01402175.2
(22) Date of filing: 14.08.2001
(51) Int. Cl.: G02B 6/44

(54) **Apparatus and method for bundling telecommunications cables**

(30) Priority: 26.09.2000 US 669753
(71) Applicant: ALCATEL, 75008 Paris (FR)
(72) Inventor: Thomas, William W., Hickory, N.C. 28601 (US)
(74) Representative: Cabinet Hirsch

(57) **Abstract**

A method and apparatus is disclosed for forming an optical fiber bundle (1) using a simple and inexpensive arrangement. A fiber bundle (1) is passed through a bath containing (2) a low modulus resin and immediately pulled through a die profile (3) having a length dimension of 10mm or less. The resin-coated fiber bundle (1) is then cured by using heat (4) to provide an optical fiber bundle that can be easily separated and manipulated by hand.

## Description

### Field of Invention

The present invention relates to a method and apparatus for grouping or ribboning communication cables, such as fiber bundles, together in a housing.

### Description of the Related Art

A conventional process to form optical fiber ribbons uses expensive, specialized equipment that requires substantial capital investment. The conventional apparatus used a complex system of drives and further required a highly skilled operator in order to ensure the quality of the optical fiber ribbon product. In such a system, a UV acrylate is introduced into a pressurized die system in the form of a continuous mold.

### Summary of the Invention

The present invention obviates the expense and complexity of the conventional process by grouping a fiber bundle together and passing the bundle through a low modulus resin bath and a profile die. The group of resin-coated fibers is passed through a heating chamber or a UV chamber to cure the resin on the bundle. The thus constructed bundle is then taken up by a reel.

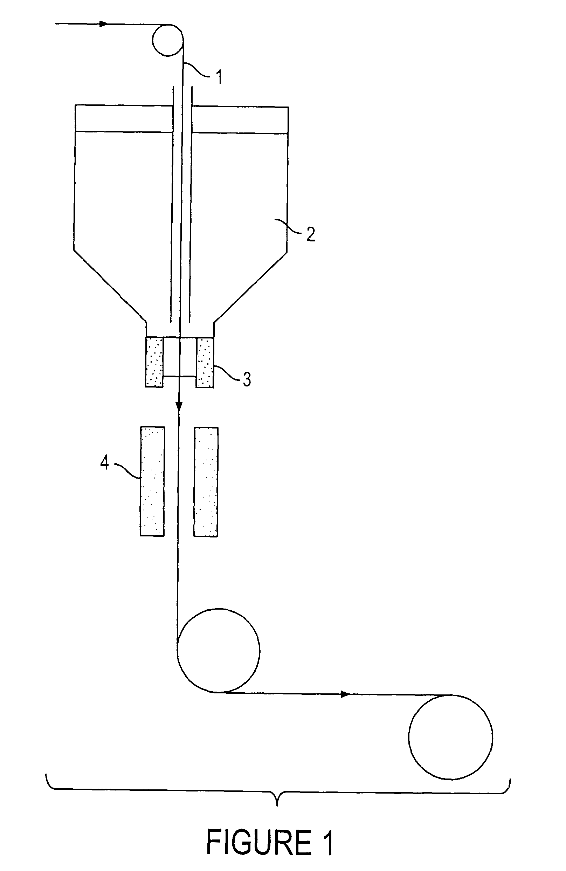

### Description of the Drawing

A preferred embodiment of the invention will discussed in more detail below with reference to the sole Figure which illustrates the system used to group together a fiber bundle.

### Description of Preferred Embodiment

Referring to the Figure, an input fiber is grouped with one or more other fibers to form a fiber bundle 1. The fiber group may be pre-grouped by any means, such as being wrapped by a colored yarns. The bundle is passed through a bath 2 comprising an inexpensive low modulus material rather than conventionally used acrylates. The bath may include materials such as a latex glue or a low molecular weight polymer coating. Both classes of materials are commonly available and inexpensive. Once cured, the resin material should exhibit sufficient tensile and crush resistance to contain the fiber bundle in a stable form. It is preferred that the material used for coating the fiber bundle have more amorphous than crystalline properties. The low modulus resin must also prevent the ingress of water through the material. The thickness of the coating varies between .05 mm and 5 mm depending on the die profile 3 through which the resin-coated fiber bundle is passed.

The cross-section shape of the die 3 does not significantly impact the invention. However, the length dimension, e.g. the distance through which the resin-coated bundle will be drawn, will be several times smaller than that used in conventionally known pultrusion processes in which a fiber glass coated material is pulled through a die that is on the order of 5-0 meters in length. By contrast, the length of the die profile along the direction through which the resin-coated fiber is pulled is on the order of approximately 5-10 mm. Due to the difference in dimension, the known pultrusion process requires significant force. A force up to the order of 5 tons, may be required to pull the fiber glass coated material through a die. By contrast, the present invention is able to provide a ribboning process for optical fibers with a much smaller pulling force. This pulling force is on the order to 500 grams. It is anticipated that the speed of the process will reach approximately 100 m/min which is much higher than that obtainable by conventional pultrusion.

Once the resin-coated material is passed through the die profile, the low modulus resin can be "cured" or crosslinked by using heat, infrared, ultraviolet light or other means 4.

The fiber bundle grouped by the low modulus resin, upon being cured or crosslinked, may be separated easily without the need for access tools. In other words, the individual optical fiber can be separated from the fiber bundle by simple manual manipulation. Selection of the resin material having a sufficiently low energy to break will permit this aspect of the invention.

The final format of the fiber group may be in any format, such as a ribbon, a fiber group comprising a minimum of two fibers. An additional die may be added to the process, in between the low modulus resin bath and heating/UV chamber, in order to define the final fiber bundle shape, such as a ribbon or a bundle. The ribbon can be a single fiber array or multiple layers of fiber array.

While a preferred embodiment of the invention has been discussed above, one skilled in the art would understand that modifications can be made thereto without departing from the spirit and the scope of the invention.

## Claims

1. A method of forming an optical fiber structure comprising:
passing a plurality of optical fibers through a curable low modulus resin (2) to provide a resin-coated fiber bundle;
immediately drawing the resin-coated fiber bundle through a die profile (3) after the fiber bundle is passed through the curable low modulus resin (2); and
curing the resin-coated fiber bundle,
wherein the die profile (3) has a length of 5-10 mm in a direction which is parallel to a travel direction of the resin-coated fiber bundle as the bundle is drawn through the die profile.

2. A method according to claim 1, wherein the low modulus resin comprises latex.

3. A method according to claim 1 or 2, wherein the low modulus resin comprises a low molecular weight polymer material.

4. A method according to claim 1 to 3, wherein the low modulus resin material has a low energy to break such that the material can be torn by hand after curing.

5. A method according to claim 1 to 4, wherein said drawing step comprises pulling the resin-coated fiber bundle through the die profile with a force on an order of hundreds of grams.

6. A method according to claim 5, wherein said force is approximately 500 grams.

7. An apparatus for forming an optical fiber structure comprising:
a container for containing a curable low modulus resin (2) to coat a fiber bundle (1);
a die profile (3) disposed immediately downstream of said container, wherein said die profile (3) has a length dimension along a travel direction of the fiber bundle through the die profile, and said length dimension is 5-10 mm; and
a curing chamber (4) disposed downstream of the die profile.
